# EUROPÄISCHE PATENTSCHRIFT

(11) **EP 0 499 182 B1**
(45) Veröffentlichungstag und Bekanntmachung des Hinweises auf die Patenterteilung: **26.10.1994**
(21) Anmeldenummer: 92102203.4
(22) Anmeldetag: 10.02.1992
(51) Int. Cl.: B24B 11/06, B24B 11/02, B23Q 7/06, F16H 21/40

(54) **Kugelschiebevorrichtung**
Ball pushing device
Dispositif d'avancement de billes

(30) Priorität: 15.02.1991 DE 4104716
(43) Veröffentlichungstag der Anmeldung: 19.08.1992
(73) Patentinhaber: Sebastian Messerschmidt GmbH & Co. Spezialmaschinenfabrik, D-97453 Schonungen (DE)
(72) Erfinder: Karb, Walter, W-8721 Schwebheim (DE); Bohnengel, Peter, W-8729 Buch (DE); Konrad, Andreas, W-8722 Untereuerheim (DE)
(74) Vertreter: Köster, Hajo, Dr.

(56) Entgegenhaltungen:
- EP-A- 0 010 648
- DE-C- 273 209
- O. Kraemer, Getriebelehre, 4. Auflage, 1966, Verlag G. Braun, Karlsruhe, Kap. XIII. Von Kurbelschleifen, Seite 205, Bild 418 b)

## Beschreibung

Die Erfindung betrifft eine Kugelschiebevorrichtung, insbesondere für Kugelschleif- und -läppmaschinen.

Übliche im Stand der Technik bekannte Kugelschleif- und -läppmaschinen für die Kugelfertigung besitzen üblicherweise eine Schleifscheibe und eine Läppscheibe, welche nachstehend als Bearbeitungsscheiben bezeichnet sind. Diese Bearbeitungsscheiben sind senkrecht stehend oder horizontal liegend angeordnet. Von den Bearbeitungsscheiben ist mindestens eine nicht drehbar (Statorscheibe) und mindestens eine Gegenscheibe drehbar (Rotorscheibe) gehaltert bzw. gelagert. Zwischen diesen Bearbeitungsscheiben erfolgt das Schleifen und Läppen der Kugeln. Eine derartige Schleif- und Läppmaschine ist beispielsweise beschrieben in der europäischen Patentanmeldung 0 010 648.

Diese bekannten Kugelschleif- und -läppmaschinen sind für einen kontinuierlichen Kugeldurchlauf ausgelegt. Zu diesem Zweck ist in der Statorscheibe eine Kreisringsektor ausgeschnitten, der durch eine radiale Leit- und Trennwand in einen Einlaufsektor und einen Auslaufsektor unterteilt ist. In den Einlaufsektor gelangende Kugeln treten durch den in diesem Einlaufsektor freiliegenden Spalt zwischen die Bearbeitungsscheiben ein, laufen unter Mitnahme durch die Rotorscheibe um die Statorscheibe um und treten nach einem Umlauf an dem im Auslaufsektor liegenden Spalt wieder aus. Die am Auslaufsektor austretenden Kugeln werden in ein umlaufendes Ringmagazin übernommen, das sie für den nächsten Bearbeitungszyklus wieder zurück zum Einlaufsektor fördert. Diese Ringmagazine sind üblicherweise in einer horizontalen Ebene angeordnet und stellen Drehtischförderer mit kreisringförmigem Förderkanal dar.

Am Übergang vom Ringmagazin zum Einlaufsektor der Bearbeitungsscheiben (Kugeleinlauf) und am Übergang von den Bearbeitungsscheiben zum Ringmagazin (Kugelauslauf) treten nun häufig Probleme hinsichtlich der Kugeltransports auf. So kann es beispielsweise an diesen Übergangsstellen zu einem unerwünschten Kugelstau kommen.

Ähnliche Probleme sind auch in der DE-PS 273 209 angesprochen. In dieser Patentschrift ist eine Vorrichtung zur raschen Herausbeförderung von Kugeln aus den Schleifrillen bei Kugelschleifmaschinen mit in senkrechter Ebene wirkenden Schleifscheiben beschrieben. Die stillstehende Schleifscheibe ist mit einem Durchbruch versehen, an welchem die Werkstücke oben herausgeführt werden, damit sie in anderer Ordnung an tieferer Stelle wieder zwischen die Schleifscheiben eingeführt werden können. Diese Vorrichtung weist einen unter dem Austrittsende der Schleifrillen drehbar angeordneten Abstreifer oder eine walzenförmige Beförderungsvorrichtung auf, die die ankommenden Kugeln bei ihrer der umlaufenden Schleifscheibe entgegengesetzten raschen Drehung mitnimmt und in einen Sammeltrog schleudert. Diese Beförderungsvorrichtung kann auf ihrem Umfang gerauht, geriffelt oder mit niedrigen Vorsprüngen versehen sein.

Aufgabe der vorliegenden Erfindung ist es daher, eine Vorrichtung bereitzustellen, die für einen kontinuierlichen und reibungslosen Kugeltransport im Be- und Entladebereich, beispielsweise an den Übergangsstellen vom Ringmagazin zu den Bearbeitungsscheiben und von den Bearbeitungsscheiben zum Ringmagazin, von Kugelschleif- und -läppmaschinen sorgt.

Gelöst wird diese Aufgabe durch eine Kugelschiebevorrichtung gemäß der Lehre des Anspruchs 1, die insbesondere ein Zusatzgerät für Kugelfertigungsmaschinen bzw. für Kugelschleif- und -läppmaschinen darstellt. Diese Kugelschiebevorrichtung kann jedoch nicht nur bei letzteren Kugelschleif- und -läppmaschinen Anwendung finden, sondern kann in all solchen Fällen eingesetzt werden, in denen für einen reibungslosen Weitertransport bzw. Transport von Kugeln Sorge getragen werden muß.

Die erfindungsgemäße Kugelschiebevorrichtung ist mit einem Motor ausgestattet, der eine Kurbel antreibt, deren Kurbelarm in einer in etwa vertikalen Ebene umläuft. Ein längliches, insbesondere flaches Kugelschiebeblatt, das auch als flacher Kugelschiebestab bzw. als Paddel bezeichnet werden kann, ist an seinem Kopfende an dem nicht vom Motor angetriebenen Ende des Kurbelarmes um eine horizontale Achse drehbar gelagert. Die erfindungsgemäße Kugelschiebevorrichtung ist zudem mit einer Führungsvorrichtung ausgestattet, die um eine horizontale Achse drehbar gelagert ist und in der das Kugelschiebeblatt in seiner Längsrichtung verschiebbar geführt ist. Diese Führungsvorrichtung befindet sich im Bereich unterhalb der vom Motor gedrehten bzw. angetriebenen Welle der Kurbel, ist jedoch ausreichend davon beabstandet. Der Abstand der vom Motor angetriebenen Welle von der Führungsvorrichtung muß größer sein, als die Länge des Kurbelarmes, damit sich der Kurbelarm überhaupt drehen kann. Dieser Abstand muß jedoch kleiner sein als die Differenz zwischen der Länge des Kugelschiebeblatts und der Länge der Kurbelwelle, damit das Kugelschiebeblatt beim Drehen der Kurbel nicht aus der Führungsvorrichtung herausgezogen wird. Zweckmäßigerweise sind die Länge des Kurbelarmes und des Kugelschiebeblattes einerseits und der Abstand zwischen angetriebener Welle und der Führungsvorrichtung andererseits derart aufeinander abgestimmt, daß das Kugelschiebeblatt in seinem mittleren Bereich (bezogen auf die Längsrichtung) von der Führungsvorrichtung geführt ist. So befindet sich die Führungsvorrichtung zweckmäßigerweise beim Drehen der Kurbel und somit beim Verschieben des Kugelschiebeblatts immer in etwa im mittleren Drittel (bezogen auf die Längsrichtung) des Kugelschiebeblatts.

Wird bei dieser Kugelschiebevorrichtung die Kurbel, ausgehend von ihrer vertikal nach oben zeigenden Stellung, gedreht, dann wird das Kugelschiebeblatt zunächst abgesenkt, "taucht in den Kugelstrom ein"und schiebt die Kugeln in die gewünschte Transportrichtung, Anschließend wird es dann wieder angehoben, so daß es aus dem Kugelstrom "herausgezogen" wird, und erreicht wieder seine Nullage, von der es ausgegangen ist.

Wird diese erfindungsgemäße Kugelschiebevorrichtung am Kugeleinlauf und somit am Übergang vom Ringmagazin zu den Bearbeitungsscheiben eingesetzt, dann sorgt sie für eine Verbesserung der kontinuierlichen Kugelzuführung. Auch wird eine gleichmäßigere Beschickung aller Rillen der Bearbeitungsscheiben bewirkt, so daß der Scheibenfüllungsgrad erhöht wird. Auch ein Kugelstau wird auf diese Weise vermieden und die Durchmischung der Kugeln wird verbessert, wobei letzteres der Erhöhung der Chargentoleranz-Qualität dient.

Wird die erfindungsgemäße Kugelschiebevorrichtung am Kugelauslauf und somit am Übergang von den Bearbeitungsscheiben zum Ringmagazin eingesetzt, dann bewirkt sie eine Verbesserung der kontinuierlichen Kugelabführung. Es wird dabei bewirkt, daß die Kugeln an diesen Übergangsstellen nicht unerwünscht lange verweilen. Somit wird auch am Kugelauslauf ein Kugelstau vermieden und die Durchmischung der Kugeln erhöht, wobei letzteres eine Erhöhung der Chargentoleranz-Qualität nach sich zieht.

Die erfindungsgemäße Kugelschiebevorrichtung kann im übrigen beispielsweise bei der in der eingangs genannten europäischen Patentanmeldung 0 010 648 (Anmeldenummer 79 103 855.7) beschriebenen Kugelschleif- und -läppmaschine anstelle der dort näher erläuterten Zellenradschleuse am Kugelauslauf eingesetzt werden. Auf diese europäische Patentanmeldung wird im übrigen hiermit ausdrücklich Bezug genommen.

Nach einer bevorzugten Ausführungsform ist die wirksame Länge des Kurbelarmes der Kurbel variierbar. Durch die Wahl der entsprechenden Länge des Kugelarmes kann man festlegen, wie weit das Kugelschiebeblatt beim Drehen der Kurbel abgesenkt und "in den Kugelstrom eingetaucht" wird.

Der Kurbelarm der Kurbel weist daher vorzugsweise ein in Längsrichtung des Kurbelarmes und somit radial verlaufendes Langloch auf, in das sich eine im Kopfende des Kugelschiebeblattes eine drehbar gelagerte Welle erstreckt und dort zumindest hinsichtlich der Längsachse bzw. Längsrichtung des Langloches fixierbar ist. Natürlich ist es auch möglich, diese Welle im Kopfende drehfest zu befestigen und im Langloch drehbar zu lagern. Um die wirksame Länge des Kurbelarmes zu variieren, verschiebt man die Welle im Langloch in die gewünschte Position und fixiert sie dann dort, beispielsweise mit Hilfe einer Schraubverbindung.

Nach einer weiterhin bevorzugten Ausführungsform ist die Führungsvorrichtung für das Kugelschiebeblatt an einem Lagerschlitten drehbar gelagert, der parallel zur Bewegungsebene des Kugelschiebeblattes und somit horizontal in Richtung derjenigen vertikalen Ebene verschiebbar geführt ist, in der sich der Kurbelarm dreht. Durch Verschieben dieses Lagerschlittens kann der Bewegungsablauf des Kugelschiebeblattes beeinflußt werden.

Die horizontale Achse der Führungsvorrichtung ist ebenso wie die vom Motor angetriebene horizontale Welle der Kurbel senkrecht zur vertikalen Ebene des Kurbelarmes angeordnet. Liegen die horizontale Achse und die horizontale Welle zusammen in einer vertikalen Ebene, dann liegt die Führungsvorrichtung direkt unterhalb der vom Motor angetriebenen Welle (Nullage). Beim seitlichen Verschieben des Lagerschlittens aus dieser Nullage wird die vertikale Ebene, in der sich die Achse der Führungs-vorrichtung befindet, seitlich parallel zur vertikalen Ebene, in der sich die vom Motor angetriebene Welle befindet, versetzt.

Die Führungsvorrichtung besitzt vorzugsweise ein rechteckiges Auge mit einer in etwa rechteckigen oder auch in etwa ovalen sowie zum Außenprofil des Kugelschiebeblattes in etwa komplementären Öffnung, durch das sich das Kugelschiebeblatt hindurch erstreckt. Das Kugelschiebeblatt besitzt somit ein Außenprofil, das mit Spiel komplementär ist zur rechteckigen Öffnung des Auges. Durch das Spiel soll sichergestellt werden, daß das Kugelschiebeblatt in seiner Längsrichtung bezüglich des Auges verschoben werden kann. Beim Drehen der Kurbel wird das Kugelschiebeblatt nicht nur in diesem Auge hin und herbewegt, sondern dreht dieses Auge auch um eine horizontale Achse. Um dies zu ermöglichen, ist das Auge mittig an einer seiner Schmalseiten mit einem sich in etwa horizontal erstrekkenden Wellenstumpf ausgestattet, der drehbar in dem Lagerschlitten gelagert ist .

Die erfindungsgemäße Kugelschiebevorrichtung kann auch mit mehr als einem Kugelschiebeblatt ausgestattet sein. So können beispielsweise auf der in dem Langloch fixierbaren Welle mehrere seitlich nebeneinander angeordnete und vorzugsweise seitlich voneinander beabstandete Kugelschiebeblätter drehbar gelagert sein. Die Kugelschiebeblätter können dabei unterschiedliche Abmessungen besitzen, sind jedoch vorzugsweise gleich. Bei der Welle handelt es sich dabei zweckmäßigerweise um eine gerade, durchgehende Welle.

Bei dieser erfindungsgemäßen Ausführungsform mit mehreren Kugelschiebeblättern ist die Öffnung des Auges zur Führung dieser Kugelschiebeblätter so groß, daß alle Kugelschiebeblätter durch diese Öffnung hindurchragen und in dem Auge geführt sind. Mit anderen Worten, die schmalen Seiten der rechteckigen Öffnung besitzen einen Abstand voneinander, der in etwa dem Abstand der Außenkanten der beiden äußeren auf einer gemeinsamen Welle drehbar gelagerten Kugelschiebeblättern entspricht. Sind die Kugelschiebeblätter auf der Welle mit einem seitlichen Abstand voneinander drehbar gelagert, dann werden die beiden längeren Seiten des Auges vorzugsweise in dem Bereich, der dem Abstand zwischen zwei benachbarten Kugelschiebeblättern entspricht, durch einen Steg miteinander verbunden, der somit in etwa parallel mit den Schmalseiten des Auges verläuft. Dadurch wird die Öffnung im Auge durch mehrere, der Zahl der Kugelschiebeblätter entsprechende Zahl von Öffnungen unterteilt.

Der Motor zum Drehen der Kurbel ist vorzugsweise ein drehzahlgeregelter, insbesondere stufenlos drehzahlgeregelter Getriebemotor, so daß man die Geschwindigkeit einstellen kann, mit der das Kugelschiebeblatt die Kugel in die gewünschte Richtung schiebt. Dies beeinflußt natürlich auch die "Förderleistung" der erfindungsgemäßen Kugelschiebevorrichtung.

Das Kugelschiebeblatt verjüngt sich vorzugsweise an seinem freien Ende unter Ausbildung einer Art Keil. Das Kugelschiebeblatt kann insbesondere die Form eines flachen Stabes besitzen, dessen Querschnitt die Form eines schmalen Rechteckes hat, wobei die Breite dieses Rechteckquerschnittes quer zur Richtung des Kugelstromes angeordnet ist. Dadurch ist die zum Transport der Kugeln zur Verfügung stehende Fläche möglichst groß.

Die erfindungsgemäße Kugelschiebevorrichtung wird nachstehend anhand der folgenden skizzenhaften und nicht maßstabsgetreuen Figuren, welche eine bevorzugte Ausführungsform zeigen, näher erläutert. Von diesen Figuren zeigen:
- Fig. 1: eine perspektivische Vorderansicht der erfindungsgemäßen Kugelschiebevorrichtung,
- Fig. 2: eine Seitenansicht (von links) der erfindungsgemäßen Kugelschiebevorrichtung und
- Fig. 3: eine schematische Darstellung des Bewegungsablaufes des Kugelschiebeblattes der Kugelschiebevorrichtung.

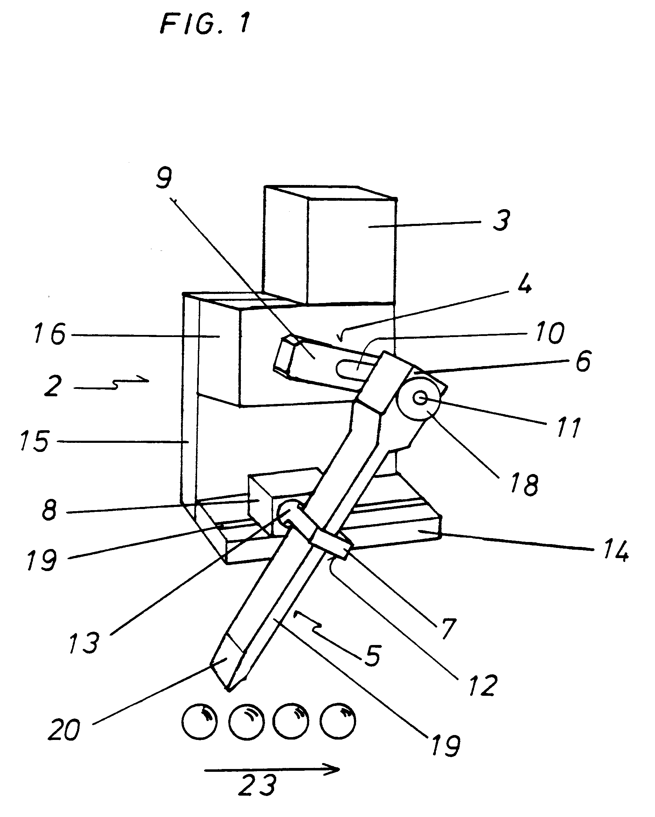

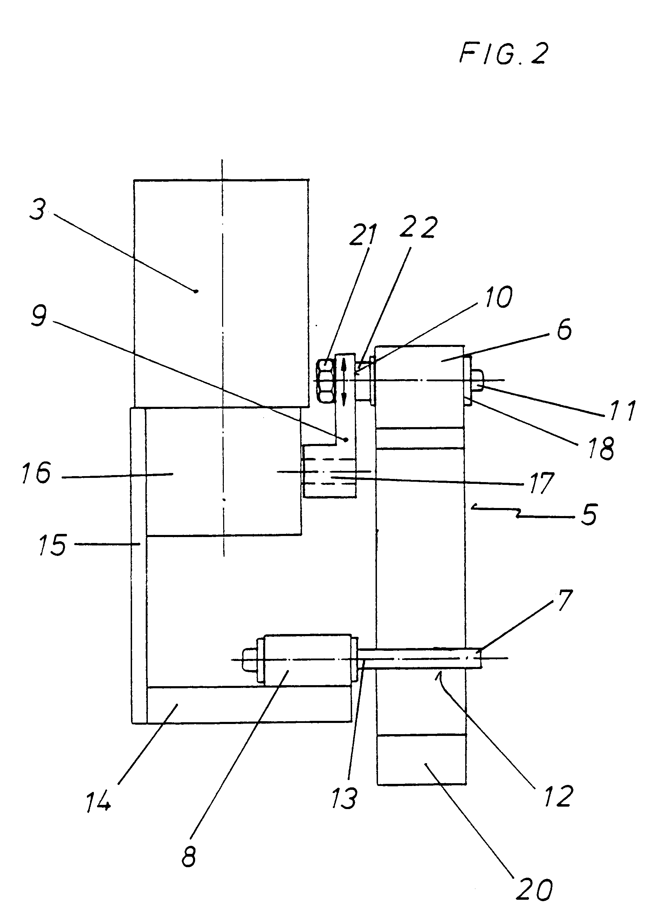

Das in der Fig. 1 gezeigte Gestell 2 besteht aus einer Bodenplatte 14, einer rückseitigen, vertikalen Platte 15 und einem Oberteil 16, auf den der Motor 3 aufgesetzt ist. Die vom Motor 3, bei dem es sich um einen stufenlos drehzahlgeregelten Getriebemotor handelt, angetriebene Welle 17 (Fig. 2) ragt horizontal in den Oberteil 16 hinein und ist dort gelagert. Der Kurbelarm 9 der Kurbel 4 besitzt an seinem nicht von der Welle 17 angetriebenen Ende ein Langloch 10, in das sich eine horizontale Welle 11 erstreckt, an der das Kopfende 6 eines Kugelschiebeblattes 5 drehbar gelagert ist. Durch eine auf der Welle 11 befestigte Scheibe 18 wird sichergestellt, daß das Kugelschiebeblatt 5 nicht von der Welle 11 nach vorne abgezogen werden kann.

Das Kopfende 6 des Kugelschiebeblattes 5 ist in etwa quaderförmig ausgestaltet und verjüngt sich zum eigentlichen Blatt 19 des Kugelschiebeblattes 5 hin. Dieses Blatt 19 hat einen schmalen rechteckförmigen Querschnitt, wobei die große Seite des Rechtecks quer zur Kugelschieberichtung (Pfeil 23 in der Fig. 1) angeordnet ist.

Das Kugelschiebeblatt 5, genauer gesagt das eigentliche Blatt 19, ist in einer Führungsvorrichtung 7 in Längsrichtung des Blattes 19 verschiebbar geführt. Die Führungsvorrichtung 7 ist als Auge 12 ausgestaltet, durch das sich das Blatt 19 erstreckt. Der Innenquerschnitt des Auges 12 ist flächenkongruent zum Querschnitt des Blattes 19 sowie geringfügig größer, so daß das Blatt 19 mit Spiel in dem Auge 12 in seiner Längsrichtung hin und herbewegt bzw. geschoben werden kann.

An der zum Gestell 2 hin zeigenden Schmalseite geht das Auge 12 der Führungsvorrichtung 7 in einen horizontal im Lagerschlitten 8 drehbar gelagerten Wellenstumpf 13 über. Beim Drehen der Kurbel 4 vollführt das Kugelschiebeblatt 5 nicht nur eine Auf- und Abbewegung, sondern dreht auch das Auge 7 sowie den dazugehörigen Wellenstumpf 13 um die horizontale Mittelachse des Wellenstumpfes 13.

Der Lagerschlitten 8 ist in etwa vertikal unterhalb der vom Motor 3 angetriebenen Welle 17 der Kurbel 4 angeordnet. Die Stirnfläche des Lagerschlittens 8 (d.h. diejenige Fläche des Lagerschlittens 8, die in der Fig. 1 nach vorne sowie zum Betrachter zeigt) befindet sich in etwa in derjenigen vertikalen Ebene, in der sich auch die Stirnseite des Kurbelarmes 9 befindet.

Der Lagerschlitten 8 ist horizontal verschiebbar, und zwar in bzw. parallel zu derjenigen vertikalen Ebene, in der der Kurbelarm 9 der Kurbel 4 umläuft.

Um diese horizontale Verschiebbarkeit zu ermöglichen, weist die Bodenplatte 14, auf der der Lagerschlitten 8 aufliegt, eine Nut 24 auf, in die der Lagerschlitten 8 mit Hilfe einer nicht gezeigten Führung eingreift. Der Lagerschlitten 8 ist dabei in seiner jeweiligen Position fixierbar.

Der Querschnitt des Kugelschiebeblattes (5) nimmt, bezogen auf die Schmalseite, zum freien Ende hin ab, so daß sich eine Keilform ergibt, die man auch als Spaten bzw. Spatel 20 bezeichnen könnte. Durch diese Keilform kann das Kugelschiebeblatt 5 leichter in den Kugelstrom "eindringen".

Wie insbesondere in der Fig. 2 zu sehen ist, ist auf das rückwärtige und somit zum Motor 3 hin zeigende Ende der Welle 11, die sich durch das Langloch 10 im Kurbelarm 9 hindurch erstreckt, eine Mutter 21 aufgeschraubt, um diese Welle 11 in der gewünschten Position im Langloch 10 fixieren zu können.

Als eine Art Distanzstück dient ein Teil 22 auf der vorderen Seite des Kurbelarmes 9. Dieses Teil 22 kann einstückig mit der Welle 11 sein; in diesem Fall besitzt die Welle 11 im Bereich des Teiles 22 einen solchen Durchmesser, daß die Welle 11 mit ihrem Teil 22 nicht in das Langloch 10 hineingeschoben werden kann. Die Welle 11 ist an ihrem rückwärtigen, zum Motor 3 hin zeigenden Ende mit einem Gewinde (nicht gezeigt) ausgestattet, auf das die Mutter 21 aufgeschraubt werden kann. Dadurch wird der Kurbelarm 9 zwischen der Mutter 21 und dem Teil 22 kraftschlüssig fixiert.

Bei dem Teil 22 kann es sich natürlich auch um einen in Axialrichtung der Welle 11 fixierten Ring oder irgendein beliebiges anderes Teil handeln, so daß der Kurbelarm 9 zwischen der Mutter 21 und diesem Teil 21 festgesetzt werden kann.

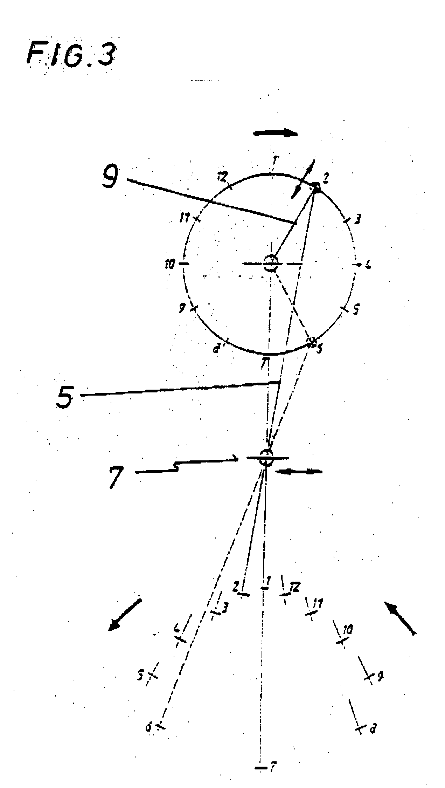

Die vom Kugelschiebeblatt 5 beim Drehen der Kurbel 4 bzw. des Kurbelarmes 9 durchgeführte Bewegung, wobei das Kugelschiebeblatt 5 in der Führungsvorrichtung 7 geführt ist, ist in der Fig. 3 schematisch gezeigt. Der in der Fig. 3 oben gezeigte Kreis deutet die Bewegung des Kurbelarmes 9 an. Den auf diesem Kreis angedeuteten Positionen 1 bis 12 des nicht vom Motor 3 angetriebenen Endes des Kurbelarmes 9 entsprechen die im unteren Bereich gezeigten Positionen 1 bis 12 des freien Endes bzw. des Keiles 20 des Kugelschiebeblattes 5.

Bei der in der Fig. 3 mit durchgezogenen Linien angedeuteten Stellung des Kugelschiebeblattes 5 befindet sich das nicht vom Motor 3 angetriebene Ende des Kurbelarmes 9 in der Position 2. Das freie Ende bzw. der Keil 20 des Kugelschiebeblatts 5 befindet sich dann in der oberen Position 2. Beim weiteren Drehen des Kurbelarmes 9 wird der Keil 20 des Kugelschiebeblattes 7 in die Position 6 abgesenkt, die in der Fig. 3 mit gestrichelten Linien gezeichnet ist. Dabei schwenkt das Kugelschiebeblatt 5 nach links (bezogen auf die Fig. 3) aus und taucht in den Kugelstrom ein.

Beim weiteren Bewegen des Kurbelarmes 9 wird das freie Ende des Kugelschiebeblattes 5 von der Position 6 in die Position 8 bewegt. Dabei werden die Kugeln portionsweise in eine Richtung, nämlich nach rechts, bezogen auf die Fig. 3, transportiert.

Bei weiter fortschreitender Drehung des Kurbelarmes 9 wird das Kugelschiebeblatt 5 aus den Kugeln bzw. dem Kugelstrom herausgezogen und erreicht wieder die ursprüngliche Position. Mit anderen Worten, das freie Ende des Kugelschiebeblattes 5 durchläuft ausgehend von der Position 8 die Positionen 9, 10, 11 und 12 und erreicht dann wieder die Ausgangsposition 1.

Bei der in den Fig. gezeigten Ausführungsform beträgt der Abstand der Längsmittelachse der vom Motor 3 angetriebenen Welle 17 von der Längsmittelachse des Wellenstumpfes 13 der Führungsvorrichtung 7 in etwa die Hälfte des Abstandes vom freien Ende des Kugelschiebeblatts 5 bis zu Welle 11.

## Patentansprüche

1. Kugelschiebevorrichtung, insbesondere für Kugelschleif- und -läppmaschinen, mit einem Gestell (2), einem am Gestell (2) befestigten Motor (3) für eine Kurbel (4), die so angeordnet ist, daß ihr Kurbelarm (9) in einer in etwa vertikalen Ebene umläuft, mindestens einem länglichen Kugelschiebeblatt (5), das an seinem Kopfende (6) an dem Kurbelarm (9) um eine horizontale Achse drehbar gelagert ist, und mit einer Führungsvorrichtung (7), die im Bereich unterhalb der vom Motor (3) angetriebenen Welle (17) der Kurbel (4) am Gestell (2) um eine horizontale Achse drehbar gelagert ist und in der das Kugelschiebeblatt (5) in seiner Längsrichtung verschiebbar geführt ist.

2. Kugelschiebevorrichtung nach Anspruch 1,
dadurch **gekennzeichnet**,
daß die wirksame Länge des Kurbelarmes (9) der Kurbel (4) variierbar ist.

3. Kugelschiebevorrichtung nach Anspruch 1 oder 2,
dadurch **gekennzeichnet**,
daß der Kurbelarm (9) an seinem von der angetriebenen Welle (17) abgewandten Ende ein in Längsrichtung des Kurbelarmes (9) verlaufendes Langloch (10) aufweist, in das sich eine horizontale Welle (11) erstreckt und dort fixierbar ist, an der das Kopfende (6) des Kugelschiebeblattes (5) drehbar gelagert ist.

4. Kugelschiebevorrichtung nach Anspruch 3,
dadurch **gekennzeichnet**,
daß mehrere seitlich nebeneinander angeordnete sowie insbesondere seitlich voneinander beabstandete Kugelschiebeblätter (5) vorhanden sind.

5. Kugelschiebevorrichtung nach einem der Ansprüche 1 bis 4,
dadurch **gekennzeichnet**,
daß die Führungsvorrichtung (7) mittels eines Wellenstumpfes (13) in einem Lagerschlitten (8) um eine horizontale Achse drehbar gelagert ist und daß der Lagerschlitten (8) am Gestell (2) horizontal und parallel zur Bewegungsebene des Kurbelarms (9) verschiebbar geführt ist.

6. Kugelschiebevorrichtung nach Anspruch 5,
dadurch **gekennzeichnet**,
daß die Führungsvorrichtung (7) als rechteckiges Auge (12) ausgebildet ist, das, sofern nur ein Kugelschiebeblatt (5) vorhanden ist, mit einer in etwa rechteckigen und zum Außenprofil des Kugelschiebeblatts (5) komplementären Öffnung, oder, sofern mehrere Kugelschiebeblätter (5) vorhanden sind, mit einer in etwa rechteckigen und zur außen um alle Kugelschiebeblätter (5) umlaufenden Kontur komplementären Öffnung versehen ist, wobei die Öffnung durch einen Steg bzw. Stege unterteilt sein kann, die zwischen seitlich beabstandeten Kugelschiebeblättern verlaufen,
und daß der Wellenstumpf (13) von einer der Schmalseiten des Auges (12) ausgeht.

7. Kugelschiebevorrichtung nach einem der Ansprüche 1 bis 6,
dadurch **gekennzeichnet**,
daß der Motor (3) ein bezüglich seiner Drehzahl stufenlos verstellbarer Getriebemotor ist.

8. Kugelschiebevorrichtung nach einem der Ansprüche 1 bis 7,
dadurch **gekennzeichnet**,
daß sich das Kugelschiebeblatt (5) an seinem freien Ende keilförmig verjüngt.

## Claims

1. Ball slide device, more particularly for ball polishing and metal lapping machines, with a frame (2), a motor (3) fixed on the frame (2) for a crank (4) which is arranged so that its crank arm (9) rotates in an approximately vertical plane, at least one oblong ball slide plate (5) which is mounted at its top end (6) on the crank arm (9) to rotate about a horizontal axis, and with a guide device (7) which is mounted rotatable about a horizontal axis on the frame (2) in the area beneath the shaft (17) of the crank (4) driven by the motor (3) and in which guide (7) the ball slide sheet (5) is longitudinally displaceable.

2. Ball slide device according to claim 1, characterised in that the active length of the crank arm (9) of the crank (1) is variable.

3. Ball slide device according to claim 1 or 2 characterised in that the crank arm (9) has at its end remote from the driven shaft (17) an oblong hole (10) running in the longitudinal direction of the crank arm (9) wherein a horizontal shaft (11) on which the top end (6) of the ball slide plate (5) is rotatably mounted extends in the oblong hole and can be fixed there.

4. Ball slide device according to claim 3, characterised in that several ball slide plates (5) are provided which are arranged sideways next to each other and more particularly spaced from each other sideways.

5. Ball slide device according to one of claims 1 to 4 characterised in that the guide device (7) is mounted to rotate in a bearing slide carriage (8) about a horizontal axis by means of a shaft end (13) and that the bearing slide carriage (8) is guided on the frame (2) for horizontal displacement parallel to the plane of movement of the crank arm (9).

6. Ball slide device according to claim 5 characterised in that the guide device (7) is designed as a rectangular eye (12) which if only one ball slide plate (5) is provided, has one roughly rectangular opening complementing the outer profile of the ball slide plate (5), or if several ball slide plates (5) are provided, has one roughly rectangular opening complementing the contour running on the outside round all the ball slide plates (5) wherein the opening can be divided by a web or webs which run between laterally spaced ball slide plates, and that the shaft end (12) extends from one of the narrow sides of the eye (12).

7. Ball slide device according to one of claims 1 to 6 characterised in that the motor (3) is a gearbox motor with infinitely variable speed.

8. Ball slide device according to one of claims 1 to 7 characterised in that the ball slide plate (5) tapers wedge-shaped at its free end.

## Revendications

1. Dispositif de poussée de billes, notamment pour machines à meuler et à roder les billes, comprenant un bâti (2), un moteur (3) fixé au bâti (2) et agissant sur une manivelle (4) qui est disposée de manière que son bras de manivelle (9) tourne dans un plan à peu près vertical, au moins une palette (5) de poussée des billes, de forme allongée, qui est articulée sur le bras de manivelle (9) à son extrémité de tête (6) pour tourner autour d'un axe horizontal, et un dispositif de guidage (7) qui tourillonne sur le bâti (2) dans la région située au-dessous de l'arbre (17) de la manivelle (4) entraîné par le moteur (3), pour tourner autour d'un axe horizontal, et dans lequel la palette (5) de poussée des billes est guidée pour coulisser dans sa direction longitudinale.

2. Dispositif de poussée de billes selon la revendication 1,
caractérisé
en ce que la longueur effective du bras (9) de la manivelle (4) est variable.

3. Dispositif de poussée de billes selon la revendication 1 ou 2,
caractérisé
en ce qu'à son extrémité la plus éloignée de l'arbre entraîné (17), le bras de manivelle (9) présente un trou allongé (10) qui s'étend dans la direction longitudinale du bras de manivelle (9), dans lequel s'étend et peut être arrêté un arbre horizontal (11) sur lequel tourillonne l'extrémité de tête (6) de la poussée de billes (5).

4. Dispositif de poussée de billes selon la revendication 3,
caractérisé
en ce qu'il y est prévu plusieurs palettes (5) de poussée de billes disposées latéralement l'une à côté de l'autre et espacées les unes des autres, notamment latéralement.

5. Dispositif de poussée de billes selon une des revendications 1 à 4,
caractérisé
en ce que le dispositif de guidage (7) est monté rotatif, au moyen d'un tourillon (13) dans un chariot porte-palier (8), et en ce que le chariot porte-palier (8) est guidé en coulissement sur le bâti (2) dans la direction horizontale et parallèle au plan du mouvement du bras de manivelle (9).

6. Dispositif de poussée de billes selon la revendication 5,
caractérisé
en ce que le dispositif de guidage (7) est constitué par un bossage rectangulaire (12) qui, lorsqu'il n'est prévu qu'une seule palette de poussée de billes (5), est muni d'une ouverture à peu près rectangulaire, complémentaire du profil extérieure de la palette de poussée de billes (5) et qui, s'il est prévu plusieurs palettes (5) de poussée de billes, est muni d'une ouverture à peu près rectangulaire, complémentaire du profil qui entoure extérieurement toutes les palettes (5) de poussée de billes, l'ouverture pouvant être subdivisée par un barreau ou plusieurs barreaux qui s'étendent entre les palettes de poussée de billes espacées latéralement,
et en ce que le tourillon (16) fait saillie sur un des petits côtés du bossage (12).

7. Dispositif de poussée de billes selon une des revendications 1 à 6,
caractérisé
en ce que le moteur (3) est un moteur à réducteur dont la vitesse de rotation est réglable par variation continue.

8. Dispositif de poussée de billes selon une des revendications 1 à 7,
caractérisé
en ce que la palette (5) de poussée de billes s'amincit en coin à son extrémité libre.
